Europäisches Patentamt

(19) European Patent Office

Office européen des brevets

(11) EP 0 987 683 B1

(12) EUROPÄISCHE PATENTSCHRIFT

(45) Veröffentlichungstag und Bekanntmachung des Hinweises auf die Patenterteilung:
**23.11.2005 Patentblatt 2005/47**

(51) Int Cl.⁷: **G10L 15/10**, G10L 15/08

(21) Anmeldenummer: **99202895.1**

(22) Anmeldetag: **08.09.1999**

(54) **Spracherkennungsverfahren mit Konfidenzmassbewertung**

Speech recognition method with confidence measure

Procédé de reconnaissance de la parole avec mesure de confiance

(84) Benannte Vertragsstaaten:
**DE FR GB**

(30) Priorität: **16.09.1998 DE 19842405**

(43) Veröffentlichungstag der Anmeldung:
**22.03.2000 Patentblatt 2000/12**

(73) Patentinhaber:
- **Philips Intellectual Property & Standards GmbH
  20099 Hamburg (DE)**
  Benannte Vertragsstaaten:
  **DE**
- **Koninklijke Philips Electronics N.V.
  5621 BA Eindhoven (NL)**
  Benannte Vertragsstaaten:
  **FR GB**

(72) Erfinder:
- **Dolfing, Jannes G.A.
  Habsburgerallee 11, 52064 Aachen (DE)**
- **Wendemuth, Andreas
  Habsburgerallee 11, 52064 Aachen (DE)**

(74) Vertreter: **Volmer, Georg et al
  Philips Intellectual Property & Standards GmbH,
  Postfach 50 04 42
  52088 Aachen (DE)**

(56) Entgegenhaltungen:
- **SCHAAF T ET AL: "Confidence measures for spontaneous speech recognition" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21. April 1997 (1997-04-21), Seiten 875-878, XP010225934 ISBN: 0-8186-7919-0**
- **WEINTRAUB M ET AL: "Neural-network based measures of confidence for word recognition" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21. April 1997 (1997-04-21), Seiten 887-890, XP010225937 ISBN: 0-8186-7919-0**
- **GOPALAKRISHNAN P S ET AL: "Decoder selection based on cross-entropies" ICASSP 1988, Bd. 1, 11. April 1988 (1988-04-11), Seiten 20-23, XP010073137**

**Beschreibung**

Die Erfindung betrifft ein Verfahren zur automatischen Erkennung sprachlicher Äuserungen, wobei eine Bewertung eines Erkennungsergebnisses mittels eines ersten Konfidenzmaßes und eine automatische Kombination mehrerer für ein Erkennungsergebnis ermittelter zweiter Konfidenzmaße zur Bestimmung des ersten Konfidenzmaßes vorgesehen ist.

Das erfindungsgemäße Verfahren läßt sich insbesondere auf dem Gebiet der "command and control"-Anwendungen einsetzen, wo mittels einzelner sprachlicher Äußerungen (in der Regel einzelne Wörter) eine Steuerung von elektrischen Geräten erfolgt. Auch in Diktieranwendungen ist das hier dargestellte Verfahren einsetzbar.

Durch Bewertung von Spracherkennungsergebnissen mittels eines Konfidenzmaßes (=Zuverlässigkeitsmaß) wird entschieden, ob ein Erkennungsergebnis für die jeweilige Anwendung ausreichend zuverlässig die tatsächlich eingegebene sprachliche Äußerung repräsentiert. Hierzu wird ein Vergleich des ermittelten Konfidenzmaßes mit einem Schwellwert durchgeführt. Gegebenenfalls wird der Benutzer aufgefordert, seine sprachliche Eingabe zu wiederholen.

Aus T. Kemp, T. Schaaf, "Confidence measures for spontaneous speech recognition", Proc. ICASSP, vol. II, Seiten 875-878, 1997, ist der Grundgedanke bekannt, zur Ermittlung eines resultierenden Konfidenzmaßes mehrere Konfidenzmaße zu kombinieren. Es werden verschiedene Kombinationsmöglichkeiten angedeutet, die aber im einzelnen nicht näher erläutert werden.

Der Erfindung liegt nun die Aufgabe zugrunde, bei dem eingangs genannten Verfahren die resultierende Fehlerrate bei der Beurteilung der Richtigkeit eines Erkennungsergebnisses zu verringern.

Die Aufgabe wird dadurch gelöst, daß die Ermittlung der die Kombination der zweiten Konfidenzmaße bestimmenden Parameter auf einer Minimierung eines Cross-Entropie-Fehlermaßes beruht.

Auf diese Weise erhält man insbesondere Parameterwerte, die als Gewichte bei einer Linearkombination der zweiten Konfidenzmaße dienen, um so das erste Konfidenzmaß zu erhalten.

Zur weiteren Reduzierung der Fehlerrate wird vorgeschlagen, daß das Konfidenzmaß vor einem Vergleich mit einem als Entscheidungsgrenze dienenden Schwellwert mittels eines benutzer- und/oder sprachäußerungsspezifischen Offset angepaßt wird.

Beim Vergleich des Konfidenzmaßes, das auch aus einer Kombination von Konfidenzmaßen bestehen kann, mit einem Schwellwert ist nun auf einfache Weise eine automatische Anpassung an bestimmte Anwendungsfälle möglich, ohne das eine Schwellwertanpassung erforderlich ist.

Die Erfindung betrifft auch ein Spracherkennungssystem mit Verarbeitungseinheiten zur Bewertung eines Erkennungsergebnisses mit einem der beschriebenen Verfahren.

Ausführungsbeispiele der Erfindung werden im folgenden anhand einer Figur näher erläutert, die die wesentlichen Komponenten eines erfindungsgemäßen Spracherkennungssystems zeigt.

Einem Funktionsblock 1 des dargestellten Spracherkennungssystems wird eine Folge

$$X = x_1, x_2 ..., x_T$$

von Merkmalsvektoren $x_t$ mit der Zeitvariablen t = 1, ..., T zugeführt, die eine sprachliche Äußerung - insbesondere ein Einzelwort - repräsentieren. Zur Bildung der Merkmalsvektoren x, wird ein in elektrischer Form vorliegendes Sprachsignal abgetastet, quantisiert und einer Cepstralanalyse unterzogen. Dabei wird das Sprachsignal in aufeinanderfolgende Rahmen eingeteilt, die sich teilweise überlappen. Für jeden Rahmen werden Cepstralwerte gebildet, die in einem Merkmalsvektor $x_t$ zusammengefaßt werden. Funktionsblock 1 beschreibt auch die übliche stochastische Sprachsignalverarbeitung mit einer Generierung von Produktionswahrscheinlichkeiten P(W I X) für eine Wahrscheinlichkeit einer sprachlichen Äußerung W gegeben die Folge X, wobei Markovmodelle HMM ("Hidden Markov Models") und bekannte Bayes-Regel zum Einsatz kommen. Der Funktionsblock 2 bildet nun das Maximum $P(W_1 IX)$ der Produktionswahrscheinlichkeiten P(W IX). Die sprachliche Äußerung $W_1$ wird als Erkennungsergebnis bewertet und gegebenenfalls für eine Weiterverarbeitung in einem elektrischen Gerät genutzt, z. B. als Steuersignal. Die ermittelten Wahrscheinlichkeiten $P(W_1 I X)$ werden weiterhin einer durch einen Funktionsblock 3 dargestellten Verarbeitung unterzogen, bei der jedem Wert $P(W_1 I X)$ ein Konfidenzmaßvektor z = $(z_1 , ..., z_N )$ mit N > 1 zugeordnet wird, dessen N Komponenten die Konfidenzmaße $z_1, ...,z_N$ (zweite Konfidenzmaße) enthalten. Jedes Konfidenzmaß enthält einen Wert, dessen Größe ein Maß für die Zuverlässigkeit des Erkennungsergebnisses $W_1$ ist.

Folgende Beispiele für mögliche Konfidenzmaße sollen hier für N =5 genannt werden:

1) $z_1$: Differenz zwischen der logarithmierten Wahrscheinlichkeit der besten und zweitbesten Sprachäußerungshypothese zu einem Zeitpunkt t zwischen dem Zeitpunkt $t_{start}$, der dem Zeitpunkt des Empfangs dem ersten Beobachtungszeitpunkt bezüglich der betreffenden sprachlichen Äußerung entspricht, und dem Zeitpunkt $t_{end}$, der dem letzten Beobachtungszeitpunkt bezüglich der betreffenden sprachlichen Äußerung entspricht ("two-best");

2) $z_2$: Differenz zwischen der logarithmierten Wahrscheinlichkeit der besten und dem Mittelwert der logarithmierten Wahrscheinlichkeit der n (z.B. n=20) besten Endhypothesen der betreffenden sprachlichen Äußerung zum Zeitpunkt t, der auch zwischen den Zeitpunkten $t_{start}$ und $t_{end}$ liegt ("n-average-best");

3) $z_3$: Unter der Annahme, daß jede Sprachäußerungshypothese mit einer logarithmierten Wahrscheinlichkeit $l_w$ zum Zeitpunkt $t_{start}$ startet und zum Zeitpunkt $t_{end}$ als Endhypothese endet, wird die Differenz zwischen der logarithmierten Wahrscheinlichkeit $l_w$ mit der Summe der "scores" (= logarithmierte Wahrscheinlichkeiten) der besten Zustaende des entsprechenden HMM im Bereich ($t_{start}$, $t_{end}$) berechnet ("n-best-state");

4) $z_4$: Längennormierte logarithmierte Wahrscheinlichkeit ("avg-acoustic")

$$l_w' = l_w /(t_{end} - t_{start} + 1);$$

5) $z_5$: Verhältnis zwischen der Anzahl HMM-Zustände des Wortes und der Anzahl Beobachtungen, die durch $t_{end} - t_{start}$ bestimmt wird ("speaking rate").

Ein verbesserte Klassifikationsergebnisse lieferndes Konfidenzmaß erhält man, wenn statt solcher einfacher ursprünglicher (Roh-)Konfidenzmaße (zweite Konfidenzmaße) ein erweiterter Vektor $z = z_{20} = (z_1^2, z_1 z_2, z_1 z_3, ..., z_5^2)$ gebildet wird, dessen Komponenten modifizierte Konfidenzmaße (modifizierte zweite Konfidenzmaße) enthalten, die durch Multiplikation jeweils zweier der ursprünglichen Konfidenzmaße gebildet werden, und zwar wird jedes ursprüngliche Konfidenzmaß mit jedem anderen ursprünglichen Konfidenzmaß multipliziert. Dieser Ansatz kann auch modifiziert werden, indem ursprüngliche Konfidenzmaße zur Bildung modifierter Konfidenzmaße miteinander multipliziert werden.

Aus den verschiedenen Konfidenzmaßen $z_1, ..., z_N$ (bzw. gegebenenfalls den modifizierten Konfidenzmaßen) für ein Erkennungsergebnis $W_1$ wird nun durch Kombination gemäß einer später näher erläuterten Kombinationsfunktion f(z) ein resultierendes Konfidenzmaß f(z) (erstes Konfidenzmaß) gebildet (Funktionsblock 4), welches dem Schwellwerts verglichen wird (Funktionsblock 5). In Abhängigkeit vom Ergebnis dieses Vergleichs wird als ein Klassifikationsergebnis c erzeugt, das entweder beinhaltet, daß das jeweilige Erkennungsergebnis $W_1$ nicht ausreichend zuverlässig (hier dann c = 0) oder als ausreichend zuverlässig (hier dann c = 1) bewertet wird. Im ersten Fall wird der Benutzer beispielsweise aufgefordet werden, seine Spracheingabe zu wiederholen.

Zur Ableitung der Art und Weise der Kombination der Konfidenzmaße z wird nun ein Vektor $z_e = (z, 1)$ definiert. Eine Entscheidungsgrenze $f(z) = \tau$ ist zu bestimmen, was im folgenden noch erläutert wird. Setzt man nun eine Linearkombination der Konfidenzmaße mit

$$f(z) = J_1 z_1 + J_2 z_2 ... + J_N z_N$$

voraus und faßt die Gewichte (Multiplikatoren) $J_1 ... J_N$ zusammen mit dem Schwellwert $\tau$ zu einem Vektor $J = (J_1, J_2, ..., J_N, \tau)$ zusammen, gelangt man zu einem Skalarprodukt

$$a = z_e J.$$

Unter Anwendung der sogenannten Bayes-Formel kann nun die a posteriori Wahrscheinlichkeit $P(c \mid z_e) =: y$ in Sigmoid-Form geschrieben werden als

$$y = \frac{1}{1 + e^{-\alpha'}}$$

mit

$$\alpha' = \ln \frac{P(z_e \mid c=1) P(c=1)}{P(z_e \mid c=0) P(c=0)}.$$

Nunmehr wird vorausgesetzt, daß klassenbedingten Wahrscheinlichkeiten $P(z_e \mid c)$ Mitglieder einer Familie exponentieller Verteilungsfunktionen (insbesonder Gauß- und Bernoulliverteilungsfunktionen) sind. Unter dieser Voraussetzung gilt a = a' . Ein solcher Ansatz ist für sehr viele Anwendungen vertretbar.

Die Entscheidungsgrenze muss entsprechend der Bayes'schen Regel bei y=0.5 liegen. Daraus folgt a = a'= 0 als Entscheidungsgrenze in dem gewählten Modell.

Um zu einer geeigneten Fehlerfunktion für das vorliegende Bayes-Entscheidungsproblem zu gelangen und mittels eines Trainings die Parameter $J_1 ... J_N$ zu bestimmen, wird nun die bedingte Wahrscheinlichkeit $P(c\,|z_c)$ geschrieben als

$$P(c|z_c) = y^c(1-y)^{1-c},$$

was einem speziellen Fall einer Bernoulli-Verteilung entspricht. Mit Iterationsschritten entsprechenden Zeitpunkten i, für die unabhängig voneinander ermittelte Trainingsdaten vorliegen, kann nun die Wahrscheinlichkeit L bezüglich der gesamten Trainingsdaten ausgedrückt werden als

$$L=\prod_i P(c_i\,|z_{i,e})=\prod_i y_i^{c_i}(1-y_i)^{1-c_i}$$

Ein Minimieren einer Fehlerfunktion $E = - \log(L)$ ist damit äquivalent zum Minimieren des sogenannten Cross-Entropy-Fehlers

$$E=-\sum_i \{c_i \log(y_i)+(1-c_i)\log(1-y_i)\}$$

Diese Fehlerfunktion hat den Vorteil, daß kleine Wahrscheinlichkeiten sehr gut abgeschätzt werden, z. B. wesentlich besser als mittels einer LMS-Fehlerfunktion ("Least Mean Square"). Das beim Training durchzuführende Minimieren der Cross-Entropie E führt mit

$$\frac{\partial E}{\partial a_i}= y_i - c_i$$

zu einer als Lernregel während eines Trainings verwendeten stochastische Sequenz

$$\delta J(i)=-\eta\, \frac{\partial E}{\partial a_i}\nabla_J a_i = \eta\, z_{i,e}(c_i-\frac{1}{1+e^{-ai}}),$$

die einem bereits bestimmten J additiv überlagert wird, so daß schließlich die Komponenten von J mit Hilfe des negativen Gradienten von der Fehlerfunktion E aktualisiert werden. $\eta$ ist eine geeignet heuristisch zu ermittelnde Konstante.

Diese Lernregel wird nun zum Training eines neuronalen Netzes mit einer Schicht und einer sigmoidförmigen Ausgabefunktion verwendet, das schließlich zur Realisierung der Funktion f(z) verwendet wird. Näheres zu Aufbau und Wirkungsweise eines solchen neuronalen Netzes läßt sich dem Buch von C. Bishop, "Neural Networks for Pattern Recognition", Oxford, 1995, Kapitel 6.7 entnehmen. Der Klammerausdruck in der Formel für $\delta J(i)$ liegt im Bereich zwischen -1 und 1. Für den Fall völliger Falschklassifizierung werden die Randwerte -1 oder 1 erreicht. Damit entspricht die Lernregel $\delta J(i)$ derjenigen, die beim Training konventioneller Perceptrons angewendet wird.

An ein solches Training schließt sich vorzugsweise noch eines Nachverarbeitung an, die auf der Maximierungs der sogenannten Gardner-Derrida-Fehlerfunktion mittels des gleichnamigen Algorithmus (siehe A. Wendemuth, "Learning the Unlearnable", J. Phys. A, 28:5423, 1995) beruht. Auf diese Weise wird eine bessere Anpassung des Trainings an Ausreißer (z. B. Daten mit sehr hohen Werten der Komponenten des Konfidenzmassvektors z) und an "sampling"-Effekte (z.B. werden Falschklassifikationen von Trainingsdaten ignoriert) bewirkt, indem die Entscheidungsschwelle $\tau$ und die Gewichte J Besonderheiten der Trainingsdaten - wie den genannten - angepaßt werden.

Eine weitere Verbesserung der Fehlerrate bei der Klassifizierung eines Erkennungsergebnis als richtig oder falsch wird dadurch erreicht, daß das Entscheidungsproblem $f(z) < \tau$ um einen benutzerspezifischen Offset $o_{bj}$, einen sprachäußerungsspezifischen Offset $o_{wk}$ oder einen sowohl benutzer- als auch sprachäußerungsspezifischen Offset $o_{bj,wk}$ ergänzt wird. Die sich daraus ergebenden Entscheidungsgrenzen lauten:

$$f(z) - o_{bj} = \tau_{bj},$$

$$f(z) - o_{wk} = \tau_{wk},$$

$$f(z) - o_{bj,wk} = \tau_{bj,wk}.$$

Der benutzerspezifische Offset $o_{bj}$ ist beispielsweise der Mittelwert, das Maximum oder das Minimum der für Trainungsäußerungen des Benutzers $b_j$ ermittelten Zuverlässigkeitsmaße ($z_1$, $z_2$, $z_3$, $z_4$ oder $z_5$). Der sprachäußerungsspezifische Offset $o_{wk}$ ist beispielsweise der Mittelwert, das Maximum oder das Minimum der für Trainingsäußerungen des Wortes $w_k$ ermittelten Zuverlässigkeitsmaße ($z_1$, $z_2$ $z_3$, $z_4$ oder $z_5$) unabhängig vom Benutzer. Der Offset $o_{bj,wk}$ wird grundsätzlich wie der Offset $o_{wk}$ bestimmt, jedoch ist er als benutzerabhängig definiert.

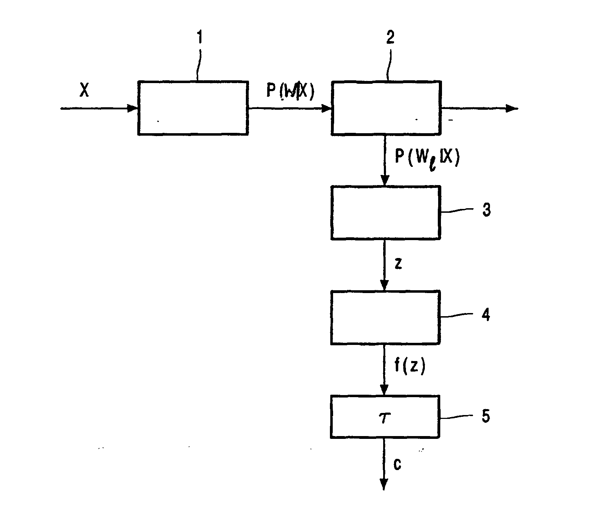

**Patentansprüche**

1. Verfahren zur automatischen Erkennung sprachlicher Äußerungen, wobei eine Bewertung eines Erkennungsergebnisses mittels eines ersten Konfidenzmaßes und eine automatische Kombination mehrerer für ein Erkennungsergebnis ermittelter zweiter Konfidenzmaße zur Bestimmung des ersten Konfidenzmaßes vorgesehen ist,
**dadurch gekennzeichnet,**
**daß** die Ermittlung der die Kombination der zweiten Konfidenzmaße gewichtenden Parameter auf einer Minimierung eines Cross-Entropie-Fehlermaßes beruht.

2. Verfahren nach Anspruch 1,
**dadurch gekennzeichnet,**
**daß** das erste Konfidenzmaß eine Linearkombination der zweiten Konfidenzmaße ist.

3. Verfahren nach Anspruch 1 oder 2,
**dadurch gekennzeichnet,**
**daß** bei der Ermittlung der die Kombination der zweiten Konfidenzmaße bestimmenden Parameter nach der Minimierung des Cross-Entropie-Fehlermaßes eine auf der Maximierung der Gardner-Derrida-Fehlerfunktion beruhende Nachverarbeitung vorgesehen ist.

4. Verfahren nach einem der Ansprüche 1 bis 3,
**dadurch gekennzeichnet,**
**daß** der Kombination der zweiten Konfidenzmaße eine Vorverarbeitung vorausgeht, bei der die zweiten Konfidenzmaße durch Multiplikation jeweils dritter Rohkonfidenzmaße gebildet werden.

5. Verfahren nach einem der Ansprüche 1 bis 4,
**dadurch gekennzeichnet,**
**daß** zur Bestimmung modifierter zweiter Konfidenzmaße jedes zweite Konfidenzmaß mit jedem anderen zweiten Konfidenzmaß multipliziert wird und daß die modifizierten zweiten Konfidenzmaße der genannten Kombination zur Bildung des ersten Konfidenzmaßes unterworfen werden.

6. Verfahren zur automatischen Erkennung sprachlicher Äußerungen mit einer Bewertung eines Erkennungsergebnisses mittels eines Konfidenzmaßes nach einem der Ansprüche 1 bis 5,
**dadurch gekennzeichnet,**
**daß** das Konfidenzmaß vor einem Vergleich mit einem als Entscheidungsgrenze dienenden Schwellwert mittels eines benutzer- und/oder sprachäußerungsspezifischen Offset angepaßt wird.

7. Spracherkennungssystem mit Verarbeitungseinheiten zur Bewertung eines Erkennungsergebnisses , angepasst zur Durchführung jedes einzelnen Verfahrensschrittes nach einem Verfahren nach einem der Ansprüche 1 bis 6.

**Claims**

1. A method of automatically recognizing speech utterances, in which a recognition result is evaluated by means of a first confidence measure and a plurality of second confidence measures determined for a recognition result is automatically combined for determining the first confidence measure, **characterized in that** the determination of the parameters weighting the combination of the second confidence measures is based on a minimization of a cross-entropy-error measure.

2. A method as claimed in claim 1, **characterized in that** the first confidence measure is a linear combination of the second confidence measures.

3. A method as claimed in claim 1 or 2, **characterized in that** in the determination of the parameters determining the combination of the second confidence measures on the basis of the minimization of the cross-entropy-error measure, a post-processing operation is performed on the basis of maximization of the Gardner-Derrida error function.

4. A method as claimed in any one of claims 1 to 3, **characterized in that** the combination of the second confidence measures is preceded by a pre-processing operation in which the second confidence measures are formed by multiplication of third rough confidence measures.

5. A method as claimed in any one of claims 1 to 4, **characterized in that**, for determining modified second confidence measures, every second confidence measure is multiplied by every other second confidence measure, and **in that** the modified second confidence measures are subjected to said combination for forming the first confidence measure.

6. A method of automatically recognizing speech utterances, in which a recognition result is evaluated by means of a confidence measure, as claimed in any one of claims 1 to 5, **characterized in that** the confidence measure is adapted by means of a user and/or speech utterance-specific offset before comparison with a threshold value serving as the decision limit.

7. A speech recognition system comprising processing units for evaluating a recognition result, adapted to perform each individual step of the method as claimed in any one of claims 1 to 6.

**Revendications**

1. Procédé de reconnaissance automatique d'expressions vocales, une évaluation d'un résultat de la reconnaissance étant prévue à l'aide d'une première mesure de confiance et d'une combinaison automatique de plusieurs deuxièmes mesures de confiance déterminées pour un résultat de reconnaissance en vue de la détermination de la première mesure de confiance,
**caractérisé en ce**
**que** la détermination des paramètres pondérant la combinaison des deuxièmes mesures de confiance repose sur une minimisation d'une mesure d'erreur d'entropie croisée.

2. Procédé selon la revendication 1,
**caractérisé en**
**que** la première mesure de confiance est une combinaison linéaire des deuxièmes mesures de confiance.

3. Procédé selon l'une des revendications 1 ou 2,
**caractérisé en ce**
**que**, pour la détermination des paramètres déterminant la combinaison des deuxièmes mesures de confiance, un post-traitement reposant sur la maximisation de la fonction d'erreur de Gardner-Ferrida est prévu après la minimisation de la mesure d'erreur d'entropie croisée.

4. Procédé selon l'une des revendications 1 à 3,
**caractérisé en ce**
**qu'**un prétraitement lors duquel les deuxièmes mesures de confiance sont formées par multiplication des troisièmes mesures de confiance brutes respectives précède la combinaison des deuxièmes mesures de confiance.

**5.** Procédé selon l'une des revendications 1 à 4,
**caractérisé en ce**
**qu'**en vue de la détermination de deuxièmes mesures de confiance modifiées, chaque deuxième mesure de confiance est multipliée avec chaque autre deuxième mesure de confiance et que les deuxièmes mesures de confiance modifiées sont soumises à ladite combinaison pour la formation de la première mesure de confiance.

**6.** Procédé de reconnaissance automatique d'expressions vocales avec une évaluation d'un résultat de reconnaissance à l'aide d'une mesure de confiance selon l'une des revendications 1 à 5,
**caractérisé en ce**
**que** la mesure de confiance est adaptée avant une comparaison avec une valeur-seuil servant de limite de décision à l'aide d'une compensation spécifique à l'utilisateur et/ou à l'expression vocale.

**7.** Système de reconnaissance vocale avec des unités de traitement pour l'évaluation d'un résultat de reconnaissance adapté à l'exécution de chaque étape individuelle du procédé selon un procédé conforme à l'une des revendications 1 à 6.

X → [1] → P(W|X) → [2] →

P(W$_\ell$|X) ↓

[3]

z ↓

[4]

f(z) ↓

$\tau$ [5]

c ↓